# FASCICULE DE BREVET EUROPEEN

(11) **EP 1 458 202 B1**
(45) Date de publication et mention de la délivrance du brevet: **05.10.2011**
(21) Numéro de dépôt: 04290640.4
(22) Date de dépôt: 09.03.2004
(51) Int. Cl.: H04W 24/00

(54) **Procede et systeme de surveillance de telephones mobiles**
Verfahren und System zur Überwachung von Mobiltelefonen
Method and system for monitoring mobile telephones

(30) Priorité: 11.03.2003 FR 0303138
(43) Date de publication de la demande: 15.09.2004
(73) Titulaire: FRANCE TELECOM, 75015 Paris (FR)
(72) Inventeur: Carlier, Ludovic, 22300 Lannion (FR); Coiffard, Laurent, 22300 Lannion (FR)
(74) Mandataire: Guy, Marion

(56) Documents cités:
- EP-A- 1 233 640
- WO-A-01/78425
- WO-A-94/10810
- WO-A-99/07136
- WO-A-99/20065
- WO-A-99/29129
- "METHOD FOR COMMUNICATING INFORMATION TO AND FOR TRAVELING USERS" IBM TECHNICAL DISCLOSURE BULLETIN, IBM CORP. NEW YORK, US, vol. 37, no. 2A, 1 février 1994 (1994-02-01), pages 109-112, XP000432580 ISSN: 0018-8689

## Description

La présente invention concerne un procédé et un système de surveillance et d'alerte de l'inactivité de terminaux de télécommunications.

Plus particulièrement, l'invention se situe dans le domaine de la téléphonie mobile et plus précisément dans le domaine de la téléphonie cellulaire.

Dans les réseaux de communication téléphonique cellulaires tels que les réseaux de type GSM, il est prévu qu'un réseau géré par un opérateur connaisse à tout instant la position d'un mobile utilisé par un usager afin de lui transférer un appel.

Pour cela, des procédures permettent aux téléphones mobiles de se connecter au réseau, par exemple lors de leur mise sous tension. La procédure « IMSI attach », c'est-à-dire la procédure d'attachement de l'identité internationale d'une station mobile, permet à un mobile de se connecter à une station de base appelée BTS, station de base de transmission. Cette connexion est ensuite mémorisée dans le réseau par un enregistreur nominal appelé HLR acronyme de « Home Location Register » ou par un enregistreur d'accueil VLR acronyme de « Visitor Location Register ».

Une autre procédure appelée « Explicit IMSI Detach » permet à un mobile d'indiquer au réseau qu'il va se déconnecter de celui-ci. Cette déconnexion est ensuite mémorisée dans le réseau par l'enregistreur nominal HLR ou par l'enregistreur d'accueil VLR. Cette procédure est employée lorsque l'utilisateur décide d'éteindre son mobile.

De par la mobilité des usagers, il est nécessaire de prévoir une mise à jour permanente de la localisation des différents usagers présents dans les différentes zones que comporte le réseau.

Par exemple, la mise à jour de la localisation d'un mobile s'effectue lorsqu'il se déplace d'une zone à une autre.

Chaque station de base BTS diffuse périodiquement le numéro de la zone de localisation à laquelle elle appartient. Chaque mobile, si ce numéro est différent de celui qu'il a préalablement mémorisé, génère un message au réseau afin de signaler son changement de position de manière à ce que sa nouvelle position soit mise à jour.

Les enregistreurs d'accueil VLR ainsi que l'enregistreur nominal HLR associé au mobile mémorisent cette position.

De plus, périodiquement, le mobile doit indiquer au réseau sa localisation en générant un message à celui-ci.

Ceci permet au réseau de déterminer, dans des conditions normales de fonctionnement, la position des mobiles dans le réseau et ainsi pouvoir lui transférer une communication.

Si l'enregistreur d'accueil VLR auquel il est rattaché ne reçoit pas ce message pendant un temps prédéterminé, il va considérer le mobile comme détaché. La procédure « Implicit IMSI detach » (détachement implicite IMSI) permet à l'enregistreur d'accueil de considérer un mobile comme déconnecté.

Lorsque le réseau doit transférer une communication, il détermine la connexion ou pas du mobile au réseau en consultant les enregistreurs d'accueil VLR ainsi que l'enregistreur nominal HLR associé au mobile. Si le mobile est connecté, le réseau obtient des enregistreurs VLR et HLR la localisation du mobile à joindre et contacte celui-ci.

Si le réseau, en consultant les enregistreurs d'accueil VLR ainsi que l'enregistreur nominal HLR associé au mobile, détermine que le mobile est déconnecté, la communication est transférée, par exemple vers un service de messagerie vocale.

Ces procédures fonctionnent correctement si le terminal est dans une zone couverte par le réseau, s'il reste des canaux radio disponibles pour transférer la communication et si le mobile est alimenté en énergie.

En effet, dans certains cas, le réseau va essayer de joindre un mobile sans succès.

Par exemple, si le mobile est dans une zone non couverte par le réseau, il ne peut plus alors être contacté par le réseau.

Ceci est aussi le cas lorsque le niveau de charge des batteries du mobile est trop faible pour assurer le fonctionnement du mobile.

La procédure « Implicit IMSI detach » précédemment décrite permet à l'enregistreur d'accueil VLR de détecter cette indisponibilité du mobile.

Cette détection effectuée périodiquement correspond à la période de mise à jour de l'enregistreur d'accueil VLR.

Ainsi, le réseau connaît après chaque mise à jour, la disponibilité des mobiles dont il a la charge.

Par contre, l'utilisateur du mobile n'est pas informé de la capacité ou non de son mobile à recevoir des communications téléphoniques.

Certains téléphones mobiles disposent d'indicateurs de niveau de réception et/ou d'indicateurs de niveau de charge des batteries du mobile.

L'utilisateur doit alors, s'il désire être joignable à tout instant, surveiller de façon continue ces indicateurs. Cette solution n'est pas réaliste dans certains cas.

Par exemple, si l'utilisateur sait qu'il se trouve sur un site disposant d'un excellent niveau de réception, que la batterie de son mobile vient d'être rechargée, il ne va pas surveiller ces indicateurs ni son mobile.

Ce mobile a pu précédemment être éteint de manière accidentelle et l'utilisateur ne connaîtra pas l'état réel de son mobile.

Le mobile, lorsque l'utilisateur décide de l'éteindre, génère un message à destination du réseau 22 de détachement explicite.

Ce message « explicit IMSI detach » est alors mémorisé dans l'enregistreur d'accueil VLR auquel il est rattaché.

L'utilisateur, ayant dû se rendre dans des lieux où les téléphones mobiles sont interdits, ayant éteint son mobile et oublié de le réactiver par la suite, ne connaît pas l'état réel de son mobile.

Ceci pénalise les utilisateurs de tels téléphones qui doivent impérativement être joignables à tout moment.

Certains utilisateurs n'utilisent que très peu leur téléphone mobile. Rangé dans un sac, celui-ci ne sert que lorsque l'utilisateur rencontre un problème majeur, tel qu'une panne de véhicule ou autre. Ces utilisateurs ont besoin d'être informés au plus tôt de la défaillance de leur téléphone mobile.

Certains utilisateurs tels que les personnes assurant des sauvetages, doivent à tout moment être joignables afin de pouvoir porter secours dans les plus brefs délais. Ils doivent aussi être informés au plus tôt de la défaillance de leur téléphone mobile.

Le document WO 99/29129 A (ERICSSON) du 10 juin 1999 décrit un procédé de surveillance en continu de l'état de terminaux dans un groupe de terminaux dans lequel les terminaux d'utilisateurs appartenant à un groupe émettent et reçoivent des messages pour s'informer mutuellement de leur état d'activité.

L'invention tente de résoudre les inconvénients de l'art antérieur en proposant un procédé d'alerte de l'état d'activité d'un terminal mobile dans un réseau de communication cellulaire, le réseau de communication cellulaire comportant des moyens d'obtention de l'état d'activité du terminal mobile, caractérisé en ce que le procédé comporte les étapes de :
- obtention de l'état d'activité ou d'inactivité du terminal mobile du réseau,
- obtention d'informations relatives à au moins un autre terminal associé à l'utilisateur du terminal mobile,
- si ledit terminal mobile est considéré inactif, génération d'au moins un message d'alerte de l'inactivité du terminal mobile à destination dudit au moins un autre terminal associé.

Ainsi, l'utilisateur d'un terminal mobile est averti de l'inactivité de son terminal et peut ainsi corriger le problème ayant généré cette inactivité. Le terminal mobile grâce à l'invention, voit son temps d'utilisation augmenté.

Plus précisément, l'étape d'obtention de l'état d'activité comporte une étape de génération d'une requête à destination d'un enregistreur d'accueil du réseau cellulaire dont la zone comprend le terminal mobile, l'enregistreur d'accueil mémorisant des informations représentatives de l'activité du terminal mobile compris dans sa zone.

Ainsi, l'obtention de l'état d'activité se fera de façon très simple pour le procédé de supervision d'alerte.

Plus particulièrement, préalablement à l'étape de génération d'une requête à destination de l'enregistreur d'accueil du réseau cellulaire, l'étape d'obtention de l'état d'activité comporte une étape de génération d'une requête à destination d'un enregistreur nominal du réseau cellulaire, en vue d'obtenir l'adresse de l'enregistreur d'accueil dont la zone comprend le terminal mobile.

Ainsi, l'obtention de l'état d'activité se fera de façon très simple pour le procédé de supervision d'alerte.

Plus particulièrement, l'étape d'obtention de l'activité du terminal mobile du réseau est réitérée un nombre prédéterminé de fois à des intervalles de temps prédéterminés et si le terminal mobile est inactif à chaque itération, ledit terminal est considéré comme inactif.

Ainsi, l'inactivité temporaire due à des conditions particulières ne sera pas prise en compte par le procédé. Celui-ci est donc beaucoup plus fiable.

Plus précisément, le message d'alerte de l'inactivité du terminal mobile est généré sur un autre réseau de communication que le réseau de communication du terminal mobile.

Ainsi, en utilisant un autre réseau de communication, le message d'alerte arrivera de manière plus sûre à l'utilisateur du terminal mobile.

Plus précisément, l'autre terminal associé fait partie du groupe de terminaux tels que les téléphones fixes, les télécopieurs et les ordinateurs et le message d'alerte est adapté au terminal associé.

Ainsi, le procédé en générant un message à différents types de terminaux permet de multiples possibilités de génération de message d'alerte.

Avantageusement, le procédé comporte en outre une étape de sélection d'un terminal associé parmi un groupe de terminaux associés.

Plus particulièrement, la sélection est effectuée à partir d'informations de localisation du terminal mobile et d'informations de localisation des terminaux associés.

Ainsi, en prenant en compte la localisation du terminal mobile ainsi que celle des terminaux associés, l'utilisateur va recevoir le message d'alerte au bon endroit, et permettre ainsi une correction du problème dans les plus brefs délais.

Plus particulièrement, la sélection est effectuée en fonction d'un ordre prédéterminé affecté aux terminaux associés.

Ainsi, toutes les possibilités d'informer l'utilisateur sont utilisées tout en évitant la surabondance de messages d'alerte.

Plus précisément, lors de l'étape d'obtention de l'état d'activité ou d'inactivité d'au moins un terminal mobile, le procédé obtient les procédures ayant été enregistrées par l'enregistreur d'accueil pour ledit terminal mobile.

Corrélativement, l'invention propose un système d'alerte de l'état d'activité d'un terminal mobile dans un réseau de communication cellulaire, le réseau de communication cellulaire comportant des moyens d'obtention de l'état d'activité du terminal mobile, caractérisé en ce que le système comporte:
- des moyens d'obtention de l'état d'activité ou d'inactivité du terminal mobile du réseau,
- des moyens d'obtention d'informations relatives à au moins un autre terminal associé à l'utilisateur du terminal mobile,
- des moyens de génération d'au moins un message d'alerte de l'inactivité du terminal mobile à destination d'au moins un autre terminal associé si ledit terminal mobile est considéré inactif.

Les avantages du système étant identiques à ceux mentionnés pour les procédés, ceux-ci ne seront pas rappelés.

L'invention concerne aussi le programme d'ordinateur stocké sur un support d'informations, ledit programme comportant des instructions permettant de mettre en oeuvre le procédé de traitement précédemment décrit, lorsqu'il est chargé et exécuté par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
- la Fig. 1 représente un système de communication dans lequel est implémentée l'invention ;
- la Fig. 2 représente l'architecture du dispositif de surveillance ;
- la Fig. 3 représente l'algorithme de surveillance effectué au niveau d'un dispositif de surveillance.

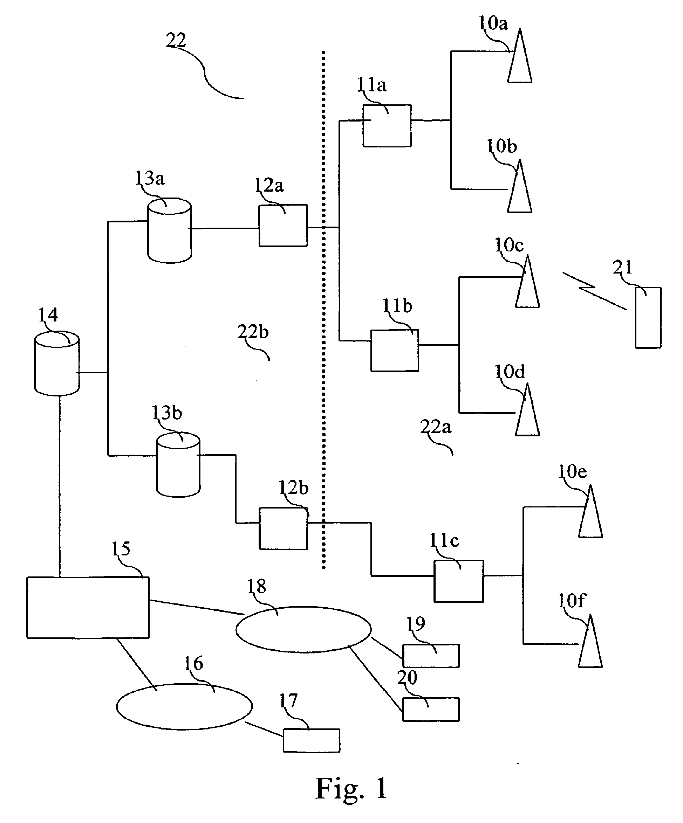

La Fig. 1 représente un système de communication conforme à l'invention.

Ce système de communication comporte un réseau cellulaire 22. Il s'agit par exemple d'un réseau cellulaire de type GSM.

Bien d'autres réseaux cellulaires tels que les réseaux peuvent être utilisés à la place de celui-ci.

A titre d'exemple le réseau cellulaire 22 peut aussi être, par exemple, un réseau de type GSM 1900 ou un réseau de type PCS 1900, acronyme de « Personal Communication Services » ou un réseau de type PDC, acronyme de « Personal Digital Cellular ».

Un réseau de type GSM auquel est relié un terminal mobile 21 tel qu'un téléphone mobile est constitué de deux sous-réseaux : un premier sous-réseau 22a appelé sous-système station de base, en anglais « Based Station Sub System » et un second sous-réseau 22b appelé sous-système réseau, en anglais « Network sub system ».

Il est à remarquer que le terminal mobile 21 peut être aussi un organiseur personnel connu sous l'acronyme PDA comportant un module de communication GSM, voire même de capteurs mobiles de surveillance comportant chacun un module de communication.

Ces capteurs sont par exemple des capteurs de température, de pression, de vitesse du vent ou autre.

Le sous-système station de base 22a comporte des stations de base BTS référencées 10a à 10f. Ces stations de base consistent en un ensemble d'émetteurs récepteurs qui ont pour tâche d'assurer la communication entre le mobile 21 et le réseau 22. La zone de couverture radio d'une station de base 10 est communément appelée une cellule.

Le sous-système station de base 22a comporte aussi des contrôleurs de stations de base BSC (contrôleurs de stations de base) référencés 11a à 11c. Ces contrôleurs 11 gèrent chacun les ressources radio pour une ou plusieurs stations de base 10. La zone de couverture d'un contrôleur de stations de base est la zone comprenant les cellules couvertes par les stations de base 10 que le contrôleur gère.

Par exemple, le contrôleur 11a a une zone de couverture constituée des stations de base 10a et 10b.

Quant au sous-réseau 22b, il comporte des contrôleurs de stations mobiles MSC référencés 12 qui assurent les communications avec les mobiles.

Les contrôleurs de stations mobiles MSC 12 constituent l'interface entre le sous-système station de base 22a et le réseau 22b.

Par exemple, le contrôleur de stations mobiles 12a, contrôle les contrôleurs de stations de base 11a et 11b. La zone de couverture d'un contrôleur de stations mobiles 12 est la zone comprenant les cellules couvertes par les stations de base 10 que le contrôleur gère.

Par exemple, le contrôleur de stations mobiles 12a a une zone de couverture constituée des cellules couvertes par les stations de base 10a, 10b, 10c et 10d.

Le sous-système réseau comporte aussi des enregistreurs d'accueil VLR notés 13a et 13b. Ces enregistreurs d'accueil sont des bases de données généralement associées aux contrôleurs de stations mobiles 12.

Par exemple, l'enregistreur d'accueil 13a est associé au contrôleur de stations mobiles 12a. Les mobiles présents dans la zone de couverture du contrôleur de stations mobiles 12a sont compris dans la base de données de l'enregistreur d'accueil 13a.

Quand un mobile, par exemple le mobile 21, entre dans la zone couverte par le contrôleur de stations 12a, l'enregistreur d'accueil 13a engage une procédure d'enregistrement. Le contrôleur de stations mobiles 12a détecte cette entrée, transfère à l'enregistreur d'accueil 13a la zone dans laquelle se trouve le mobile 21, par exemple en indiquant la référence associée au contrôleur de stations de base 11b ou plus précisément la référence associée à la station de base 10c.

Si la station mobile 21 n'a pas préalablement été enregistrée, c'est-à-dire que le mobile n'était pas auparavant dans la zone de couverture du contrôleur de stations mobiles 12a, l'enregistreur d'accueil échange des informations avec l'enregistreur nominal 14 afin de pouvoir assurer le transfert d'appel dans lequel est impliqué le mobile 21.

Le sous-système réseau 22b comporte aussi un enregistreur nominal 14 qui est une base de données de localisation et de caractérisation des abonnés au réseau cellulaire.

L'enregistreur nominal 14 mémorise des informations telles que des informations de localisation permettant le routage des appels vers le contrôleur de stations mobiles contrôlant la zone dans laquelle est situé le mobile, l'identifiant international de la station mobile (IMSI), le numéro international de station mobile (MISDN). L'identifiant international et le numéro international servent à identifier le mobile.

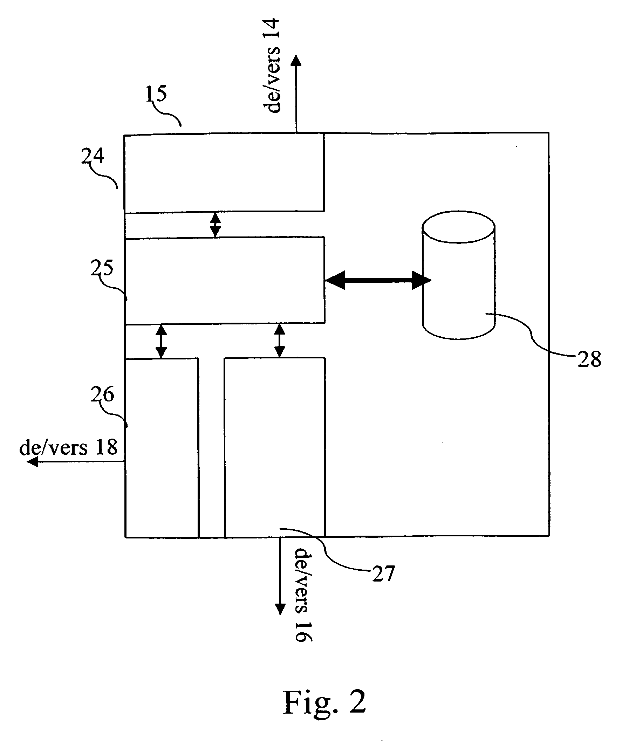

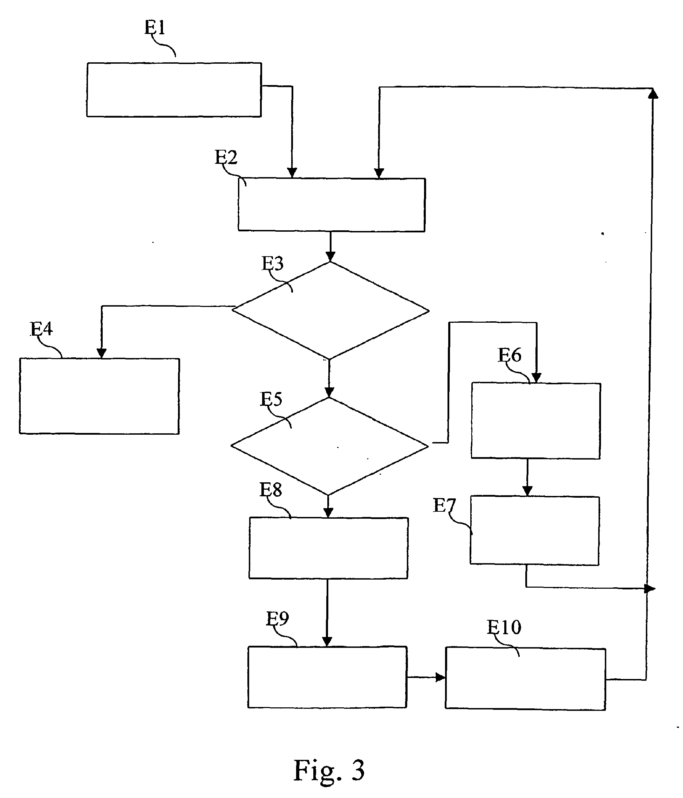

Selon l'invention, un système de supervision 15 est connecté au réseau 22 par l'intermédiaire par exemple de l'enregistreur nominal 14. Ce système de supervision sera décrit plus en détail en référence aux Figs. 2 et 3.

Ce système de supervision est connecté à un second réseau 16 et à un troisième réseau 18.

Le réseau 16 est un réseau téléphonique filaire classique de réseau téléphonique commuté RTC permettant au système de supervision 15 de communiquer avec le ou les téléphones fixes 17 de l'utilisateur du mobile 21.

Nous considérons ici comme téléphone fixe de l'utilisateur, le ou les téléphones fixes dont l'utilisateur aura communiqué le numéro au système de supervision 15. Cela peut être le téléphone de son domicile, de son lieu de travail ou tout autre lieu auquel il est susceptible de se trouver ou de passer à un moment prédéterminé.

Le troisième réseau 18 est un réseau de communication permettant l'échange de communications entre terminaux informatiques tels que des ordinateurs.

Par l'intermédiaire de ce réseau 18, le système de supervision 15 peut communiquer avec le ou les ordinateurs auxquels l'utilisateur a accès. Cela peut être par exemple l'ordinateur de l'utilisateur à son domicile 19 ou celui de son lieu de travail.

A ce réseau, un dispositif informatique 20 est aussi connecté. Il permet de paramétrer le système de surveillance 15 à distance.

Par l'intermédiaire du dispositif informatique 20, les numéros internationaux (MISDN) des mobiles à superviser seront entrés dans la base de données 28 du système de supervision 15 ainsi que toutes les informations relatives aux utilisateurs à superviser.

La Fig. 2 représente un schéma bloc décrivant les principaux éléments d'un système de supervision 15.

Il est à remarquer que les éléments constitutifs de ce système peuvent être répartis sur différents systèmes informatiques, sur un même site ou sur différents sites.

Le terminal informatique 20 permettant de paramétrer le système de supervision peut aussi être intégré au système de supervision 15.

Le système de supervision 15 peut aussi être intégré dans un unique dispositif de supervision.

Le système de supervision 15 est un système centralisé d'un ou de plusieurs serveurs. Il va assurer le service de supervision, c'est-à-dire la surveillance et l'alerte de l'inactivité de terminaux téléphoniques cellulaires 21.

Le système de supervision 15 est constitué d'un moyen de communication noté 24 permettant d'assurer l'échange d'informations avec le réseau téléphonique cellulaire 22.

Le moyen de communication 24 est prévu pour générer des requêtes à destination de l'enregistreur nominal 14 du réseau 22, voire à destination d'un des enregistreurs d'accueil 13 du réseau 22.

Ces requêtes sont effectuées afin d'obtenir des informations relatives à l'état du mobile 21.

Le système de communication comporte en outre un second moyen de communication 26 permettant de communiquer avec le dispositif informatique 20 et ainsi recevoir de nouveaux paramètres nécessaires au fonctionnement de l'algorithme tel que décrit en référence à la Fig. 3 ou de mettre à jour les informations de la base de données 28.

Le second moyen de communication 26 permet aussi de transférer, par l'intermédiaire du réseau 18, des messages à destination de l'ordinateur 19 de l'utilisateur de la station mobile.

La base de données 28 mémorise toutes les informations relatives aux utilisateurs à superviser.

Ces informations comprennent pour chaque utilisateur, le numéro international de station mobile (MISDN) à superviser, le numéro de téléphone du domicile de l'utilisateur de la station mobile et/ou le numéro de téléphone de son lieu de travail, l'adresse Internet de celui-ci, voire son adresse E-mail personnelle et/ou son adresse E-mail professionnelle, le numéro de télécopieur de l'utilisateur, voire même une table comprenant d'autres informations relatives à l'utilisateur de la station mobile.

Le système de communication comporte aussi un moyen de communication 27 permettant d'établir, par l'intermédiaire d'un autre réseau, plus particulièrement le réseau téléphonique filaire noté 16, une communication téléphonique à destination du téléphone fixe de l'utilisateur noté 17 ou de son télécopieur non représenté à la Fig. 1.

Le moyen de contrôle 25 est prévu pour superviser les moyens 24, 26, 27 et 28. Il est constitué d'un processeur, d'une mémoire vive et d'une mémoire morte. Le moyen de contrôle est prévu pour exécuter les différentes étapes de l'algorithme de supervision qui sera décrit en référence à la Fig.3.

La Fig. 3 représente l'algorithme de supervision effectué au niveau du système de supervision selon l'invention.

L'algorithme de la Fig. 3 est constitué de dix étapes référencées E1 à E10 effectuées par le moyen de contrôle 25 du système de supervision 15 tel que décrit en Fig. 2.

Le moyen de contrôle 15 lit à partir de la mémoire morte ou d'un support d'informations tel qu'un disque compact CD-ROM, les instructions du programme correspondant aux étapes E1 à E10 de la Fig. 3 et les charge en mémoire vive RAM pour les exécuter.

Périodiquement, et selon des critères prédéterminés, le moyen de contrôle 25 déclenche un programme de vérification de l'état du mobile 21.

Il est à remarquer que le programme de vérification peut être déclenché à la requête d'un système ou d'un dispositif tel que par exemple le dispositif informatique 20.

A l'étape E1, le moyen de contrôle 25 initialise un compteur n et passe ensuite à l'étape E2. A cette étape, le moyen de contrôle 25 génère, par l'intermédiaire du moyen de communication 24, une requête à destination du réseau 22 afin d'obtenir des informations sur l'activité du mobile 21.

Plus précisément, le moyen de communication 24 interroge l'enregistreur nominal 14 du réseau 22.

Cette interrogation se fait en envoyant un message à l'enregistreur nominal 14, le message contenant le numéro international (MISDN) de la station mobile 21.

L'enregistreur nominal 14, à la réception de la requête, détermine à partir du numéro international (MISDN), l'identifiant international de la station mobile (IMSI) ainsi que l'identifiant du registre d'accueil 13a associé au contrôleur de stations mobiles 12a de la zone dans laquelle est censé se trouver le mobile 21. Ces deux informations déterminées, l'enregistreur nominal 13a communique alors celles-ci au moyen de communication 24.

A la réception de ces informations, le moyen de communication 24 interroge l'enregistreur d'accueil 13a du réseau 22, en donnant l'identifiant international de la station mobile 21 précédemment communiqué par l'enregistreur nominal 13a, afin d'obtenir de celui-ci des informations représentatives de l'activité et/ou de la disponibilité du mobile 21.

L'enregistreur d'accueil 13a analyse les données relatives à l'identifiant international communiqué qu'il possède dans sa base de données. Ces données sont par exemple l'existence de procédures décrites précédemment telles que « IMSI attach », « Explicit IMSI detach » ou « Implicit IMSI detach ».

L'enregistreur d'accueil 13a communique alors ces données au système de supervision 15, ou communique au système de supervision 15 un message contenant l'activité ou l'inactivité du mobile concerné.

Il est à remarquer que si le système de supervision 15 possède déjà l'identifiant international (IMSI) de la station mobile concernée, celui-ci peut directement, si la configuration du réseau 22 le permet, interroger l'enregistreur d'accueil 13a afin d'obtenir ces informations.

Cette étape effectuée, le contrôleur 25 passe à l'étape E3 qui est un test visant à déterminer si le terminal 21 est actif ou non actif durant un temps prédéterminé.

Si le terminal 21 est actif, c'est-à-dire qu'une procédure « IMSI attach » a été enregistrée par l'enregistreur d'accueil 13a et qu'aucune procédure « Explicit IMSI detach » ou « Implicit IMSI detach » n'a été enregistrée par celui-ci, le contrôleur 25 passe à l'étape E4.

Le contrôleur 25 termine alors à l'étape E4 la procédure d'analyse de l'activité du mobile 21. Le mobile 21 est actif, aucun problème de réception n'existe, aucun problème lié au niveau de charge des batteries du mobile 21 n'existe, aucun problème lié à l'extinction du mobile n'existe, il n'est donc pas nécessaire de continuer l'analyse de l'activité.

Par la suite, le système de supervision 15 peut recommencer la même procédure à l'étape E1 pour un autre mobile dont il a la charge.

Si le terminal 21 est inactif, c'est-à-dire qu'aucune procédure « IMSI attach » n'a été enregistrée par l'enregistreur d'accueil 13a ou qu'une procédure « Explicit IMSI detach » ou « Implicit IMSI detach » a été enregistrée par celui-ci, le contrôleur 25 passe à l'étape E5.

A cette étape, le contrôleur 25 compare la valeur du compteur n à une valeur prédéterminée L.

Si la valeur du compteur n est inférieure à la valeur prédéterminée L, le contrôleur 25 passe à l'étape E6.

A l'étape E6, le contrôleur 25 incrémente la valeur du compteur n d'une unité et déclenche une temporisation T.

A l'étape suivante E7, le contrôleur 25 attend l'échéance de la temporisation T précédemment déclenchée.

A la fin de cette temporisation, le contrôleur 25 retourne à l'étape E2, et les opérations E2 E3, E5, E6 et E7 précédemment décrites sont réitérées.

Les étapes E2, E3, E5, E6 et E7 correspondent à une boucle de vérification-confirmation de l'inactivité du mobile.

En effet, il serait inopportun de considérer un terminal comme définitivement inactif alors que cette inactivité n'est que temporaire. Ceci peut être le cas lors d'un passage sous un tunnel par exemple.

Ceci est aussi le cas lorsque la dernière mise à jour de la base de données de l'enregistreur d'accueil 13a a été effectuée par l'enregistreur d'accueil 13a depuis un certain temps.

Ainsi, en faisant plusieurs fois la boucle de vérification, le contrôleur 15 obtient de l'enregistreur d'accueil 13a les informations relatives à une mise à jour récente. En ajustant la temporisation et la valeur prédéterminée L à la période de mise à jour de la base de données de l'enregistreur d'accueil 13a, le système de supervision est ainsi sûr d'avoir la dernière mise à jour de la base de données de l'enregistreur d'accueil 13a.

Si le terminal 21 est redevenu actif, la vérification a montré que l'inactivité n'était que temporaire, le contrôleur 25 passe à l'étape E4 précédemment décrite.

Ainsi, aucun problème de réception n'existe, aucun problème lié au niveau de charge des batteries du mobile 21 n'existe, aucun problème lié à l'extinction du mobile n'existe, il n'est donc pas nécessaire de continuer l'analyse de l'activité.

Par la suite, le système de supervision 15 peut recommencer à l'étape E1 la même procédure pour un autre mobile dont il a la charge.

Si à l'étape E3, le terminal 21 est toujours inactif, le contrôleur 15 passe à l'étape E5 et vérifie si la valeur du compteur n est supérieure ou égale à la valeur prédéterminée L.

Si la valeur du compteur n est supérieure ou égale à la valeur prédéterminée L, le contrôleur 25 passe à l'étape E8.

Le terminal 21 est alors considéré comme inactif, le procédé de supervision va alors essayer de prévenir l'abonné du problème lié à son mobile 21.

A l'étape E8, le contrôleur 25 déclenche la génération d'au moins un message d'avertissement à destination d'au moins un autre terminal associé à l'utilisateur du mobile 21 inactif.

Pour cela, le contrôleur 25 interroge la base de données 28 afin d'obtenir les coordonnées d'au moins un autre terminal associé à l'utilisateur du mobile.

A partir du numéro international de station mobile (MISDN) supervisée et inactive, le contrôleur 25 obtient de la base de données 28, le numéro de téléphone du domicile de l'utilisateur de la station mobile et/ou le numéro de téléphone de son lieu de travail et/ou l'adresse Internet de celui-ci, voire son adresse E-mail personnelle et/ou son adresse E-mail professionnelle, le numéro de télécopieur de l'utilisateur.

Si une seule coordonnée existe, le contrôleur 25 génère un message approprié à ce terminal associé par l'intermédiaire du moyen de communication 27 si le terminal est un téléphone ou du moyen de communication 28 si le terminal est un ordinateur.

Si le terminal associé est un récepteur téléphonique classique 17, un message vocal tel que «Votre téléphone mobile ne semble pas être en état de marche selon notre service. Veuillez vérifier que le téléphone est allumé, que les batteries soient suffisamment chargées ou contacter notre service après vente» est transmis au récepteur téléphonique de l'utilisateur du mobile 21.

Si le terminal associé est un télécopieur, un message similaire et adapté à être imprimé par un télécopieur est transmis au télécopieur de l'utilisateur du mobile 21.

Si le terminal associé est un ordinateur 19, un message similaire sous forme de message électronique est transmis à l'ordinateur de l'utilisateur du mobile 21.

Si plusieurs coordonnées existent, le contrôleur 25 détermine de façon automatique la coordonnée à laquelle l'utilisateur est censé être le plus proche parmi l'ensemble de ces coordonnées.

Pour cela, le contrôleur 25 obtient par l'intermédiaire du moyen de communication 25 et du réseau 22 des informations représentatives de la dernière localisation du terminal mobile dans le réseau 22.

Ce type d'informations est connu du réseau 22, plus précisément par les enregistreurs d'accueil 13 et/ou l'enregistreur nominal 14.

En effet, pour un utilisateur ayant son domicile dans la cellule couverte par la station de base 10a de Fig. 1 et son lieu de travail dans la cellule 10c, il est aisé pour le réseau 22 de fournir au contrôleur 25 un identifiant de la cellule dans laquelle se trouvait le terminal mobile à sa dernière localisation.

Plus précisément, pour un utilisateur ayant son domicile dans la cellule couverte par la station de base 10a, son lieu de travail dans la cellule 10c et dont le trajet domicile lieu de travail passe par la cellule 10b, le réseau 22 peut aussi fournir au contrôleur 25 la liste des dernières cellules traversées par le mobile.

Le réseau 22 peut aussi fournir, s'il a effectué des mesures de localisation dans une même cellule selon un procédé de triangulation, une information plus précise quant à sa localisation dans la cellule.

A partir de la dernière position connue, voire même des dernières cellules traversées, le contrôleur 25 choisit, parmi les coordonnées associées à l'utilisateur et mémorisées dans la base de données, la coordonnée la plus proche de la dernière localisation ou la coordonnée vers laquelle l'utilisateur du mobile 21 est censé se diriger.

Pour cela, les coordonnées associées à l'utilisateur contenues dans la base de données 28 comportent non seulement les numéros de téléphone ou les adresses électroniques des dispositifs associés à l'utilisateur, mais aussi des informations représentatives de la localisation de ces dispositifs.

Le contrôleur 25 génère ensuite un message approprié à destination du dispositif dont la localisation a précédemment été choisie.

Ce message est envoyé soit par l'intermédiaire du réseau 18 pour une destination de message vers un ordinateur 19 associé à l'utilisateur, soit par l'intermédiaire du réseau 16 pour une destination de message vers un téléphone fixe 17 ou du télécopieur associé à l'utilisateur.

Ce ou ces messages ayant été générés, le contrôleur passe à l'étape E9, où il réinitialise les compteurs et temporisations de l'algorithme.

Cette opération effectuée, le contrôleur 25 passe à l'étape E10 et attend un temps prédéterminé avant de retourner à l'étape E2 précédemment décrite.

Selon une variante, le contrôleur génère un message au numéro de téléphone du domicile de l'utilisateur du mobile 22 dans un premier temps, puis à l'issue d'un délai prédéterminé, réitère l'algorithme, dans un second temps.

Si le mobile 21 est toujours inactif, le contrôleur génère alors un message au numéro de téléphone du lieu de travail de l'utilisateur du mobile 21.

Ainsi, selon cette variante, le processeur génère séquentiellement un message à chacun des dispositifs associés au terminal inactif selon un ordre prédéterminé et cela tant que l'utilisateur n'a pas remédié au problème existant sur son téléphone mobile 21.

## Revendications

1. Procédé d'alerte de l'état d'activité d'un terminal mobile dans un réseau de communication cellulaire, le réseau de communication cellulaire comportant des moyens d'obtention de l'état d'activité du terminal mobile, **caractérisé en ce que** le procédé comporte les étapes de : obtention de l'état d'activité ou d'inactivité du terminal mobile du réseau, obtention d'informations relatives à au moins un autre terminal associé à l'utilisateur du terminal mobile, si ledit terminal mobile est considéré inactif, génération d'au moins un message d'alerte de l'inactivité du terminal mobile à destination dudit au moins un autre terminal associé.

2. Procédé selon la revendication 1, **caractérisé en ce que** l'étape d'obtention de l'état d'activité comporte une étape de génération d'une requête à destination d'un enregistreur d'accueil du réseau cellulaire dont la zone comprend le terminal mobile, l'enregistreur d'accueil mémorisant des informations représentatives de l'activité du terminal mobile compris dans sa zone.

3. Procédé selon la revendication 2, **caractérisé en ce que** préalablement à l'étape de génération d'une requête à destination de l'enregistreur d'accueil du réseau cellulaire, l'étape d'obtention de l'état d'activité comporte une étape de génération d'une requête à destination d'un enregistreur nominal du réseau cellulaire, en vue d'obtenir l'adresse de l'enregistreur d'accueil dont la zone comprend le terminal mobile.

4. Procédé selon l'une quelconque des revendications 1 à 3, **caractérisé en ce que** l'étape d'obtention de l'activité du terminal mobile du réseau est réitérée un nombre prédéterminé de fois à des intervalles de temps prédéterminés et si le terminal mobile est inactif à chaque itération, ledit terminal est considéré comme inactif.

5. Procédé selon l'une quelconque des revendications 1 à 4, **caractérisé en ce que** le message d'alerte de l'inactivité du terminal mobile est généré sur un autre réseau de communication que le réseau de communication du terminal mobile.

6. Procédé selon l'une quelconque des revendications 1 à 5, **caractérisé en ce que** l'autre terminal associé fait partie du groupe de terminaux tels que les téléphones fixes, les télécopieurs et les ordinateurs.

7. Procédé selon la revendication 6, **caractérisé en ce que** le message d'alerte est adapté au terminal associé.

8. Procédé selon l'une quelconque des revendications 1 à 5, **caractérisé en ce que** le procédé comporte en outre une étape de sélection d'un terminal associé parmi un groupe de terminaux associés.

9. Procédé selon la revendication 8, **caractérisé en ce que** la sélection est effectuée à partir d'informations de localisation du terminal mobile et d'informations de localisation des terminaux associés.

10. Procédé selon la revendication 9, **caractérisé en ce que** la sélection est effectuée en fonction d'un ordre prédéterminé affecté aux terminaux associés.

11. Procédé selon l'une quelconque des revendications 2 à 10, **caractérisé en ce que** lors de l'étape d'obtention de l'état d'activité ou d'inactivité d'au moins un terminal mobile, le procédé obtient les procédures ayant été enregistrées par l'enregistreur d'accueil pour ledit terminal mobile.

12. Système d'alerte de l'état d'activité d'un terminal mobile dans un réseau de communication cellulaire, le réseau de communication cellulaire comportant des moyens d'obtention de l'état d'activité du terminal mobile, **caractérisé en ce que** le système comporte: des moyens d'obtention de l'état d'activité ou d'inactivité du terminal mobile du réseau, des moyens d'obtention d'informations relatives à au moins un autre terminal associé à l'utilisateur du terminal mobile, des moyens de génération d'au moins un message d'alerte de l'inactivité du terminal mobile à destination dudit au moins un autre terminal associé si ledit terminal mobile est considéré inactif.

13. Programme d'ordinateur stocké sur un support d'informations, ledit programme comportant des instructions permettant de mettre en oeuvre le procédé de traitement selon l'une quelconque des revendications 1 à 11, lorsqu'il est chargé et exécuté par un système informatique.

## Claims

1. Method of alert of the state of activity of a mobile terminal in a cellular communication network, the cellular communication network comprising means for obtaining the state of activity of the mobile terminal, **characterized in that** the method comprises the steps of: obtaining the state of activity or of inactivity of the mobile terminal of the network, obtaining information relating to at least one other terminal associated with the user of the mobile terminal, if said mobile terminal is considered inactive, generating of at least one message of alert of the inactivity of the mobile terminal destined for said at least one other associated terminal.

2. Method according to Claim 1, **characterized in that** the step of obtaining the state of activity comprises a step of generating a request destined for a visitor register of the cellular network whose zone comprises the mobile terminal, the visitor register storing information representative of the activity of the mobile terminal included in its zone.

3. Method according to Claim 2, **characterized in that** prior to the step of generating a request destined for the visitor register of the cellular network, the step of obtaining the state of activity comprises a step of generating a request destined for a home register of the cellular network, with a view to obtaining the address of the visitor register whose zone includes the mobile terminal.

4. Method according to any one of Claims 1 to 3, **characterized in that** the step of obtaining the activity of the mobile terminal of the network is repeated a predetermined number of times at predetermined time intervals and if the mobile terminal is inactive at each repetition, said terminal is considered to be inactive.

5. Method according to any one of Claims 1 to 4, **characterized in that** the message of alert of the inactivity of the mobile terminal is generated on a communication network other than the communication network of the mobile terminal.

6. Method according to any one of Claims 1 to 5, **characterized in that** the other associated terminal forms part of the group of terminals such as fixed telephones, fax machines and computers.

7. Method according to Claim 6, **characterized in that** the alert message is adapted to the associated terminal.

8. Method according to any one of Claims 1 to 5, **characterized in that** the method furthermore comprises a step of selecting an associated terminal from among a group of associated terminals.

9. Method according to Claim 8, **characterized in that** the selection is performed on the basis of information regarding location of the mobile terminal and information regarding location of the associated terminals.

10. Method according to Claim 9, **characterized in that** the selection is performed as a function of a predetermined order assigned to the associated terminals.

11. Method according to any one of Claims 2 to 10, **characterized in that** during the step of obtaining the state of activity or of inactivity of at least one mobile terminal, the method obtains the procedures that have been registered by the visitor register for said mobile terminal.

12. System of alert of the state of activity of a mobile terminal in a cellular communication network, the cellular communication network comprising means for obtaining the state of activity of the mobile terminal, **characterized in that** the system comprises: means for obtaining the state of activity or of inactivity of the mobile terminal of the network, means for obtaining information relating to at least one other terminal associated with the user of the mobile terminal, means for generating at least one message of alert of the inactivity of the mobile terminal destined for said at least one other associated terminal if said mobile terminal is considered inactive.

13. Computer program stored on an information medium, said program comprising instructions making it possible to implement the processing method according to any one of Claims 1 to 11, when it is loaded and executed by a computerized system.

## Patentansprüche

1. Verfahren zur Warnung über den Aktivitätszustand eines mobilen Endgeräts in einem zellularen Kommunikationsnetz, wobei das zellulare Kommunikationsnetz Einrichtungen zur Erlangung des Aktivitätszustands des mobilen Endgeräts aufweist, **dadurch gekennzeichnet, dass** das Verfahren die Schritte aufweist: Erlangung des Aktivitätszustands oder Inaktivitätszustands des mobilen Endgeräts des Netzes, Erlangung von Informationen bezüglich mindestens eines anderen Endgeräts, das dem Benutzer des mobilen Endgeräts zugeordnet ist, wenn das mobile Endgerät als inaktiv angesehen wird, Erzeugung mindestens einer Warnmitteilung über den Inaktivitätszustand des mobilen Endgeräts an das mindestens eine andere zugeordnete Endgerät.

2. Verfahren nach Anspruch 1, **dadurch gekennzeichnet, dass** der Schritt der Erlangung des Aktivitätszustands einen Schritt der Erzeugung einer Anfrage an ein Besucherregister des zellularen Netzes aufweist, dessen Zone das mobile Endgerät enthält, wobei das Besucherregister Informationen speichert, die für die Aktivität des in seiner Zone enthaltenen mobilen Endgeräts repräsentativ sind.

3. Verfahren nach Anspruch 2, **dadurch gekennzeichnet, dass**, vor dem Schritt der Erzeugung einer Anfrage an das Besucherregister des zellularen Netzes, der Schritt der Erlangung des Aktivitätszustands einen Schritt der Erzeugung einer Anfrage an ein Heimatregister des zellularen Netzes aufweist, um die Adresse des Besucherregisters zu erhalten, dessen Zone das mobile Endgerät enthält.

4. Verfahren nach einem der Ansprüche 1 bis 3, **dadurch gekennzeichnet, dass** der Schritt der Erlangung der Aktivität des mobilen Endgeräts des Netzes eine vorbestimmte Anzahl von Malen in vorbestimmten Zeitintervallen wiederholt wird, und wenn das mobile Endgerät bei jeder Wiederholung inaktiv ist, wird das Endgerät als inaktiv angesehen.

5. Verfahren nach einem der Ansprüche 1 bis 4, **dadurch gekennzeichnet, dass** die Warnmitteilung über die Inaktivität des mobilen Endgeräts in einem anderen Kommunikationsnetz als dem Kommunikationsnetz des mobilen Endgeräts erzeugt wird.

6. Verfahren nach einem der Ansprüche 1 bis 5, **dadurch gekennzeichnet, dass** das andere zugeordnete Endgerät Teil der Gruppe von Endgeräten wie Festnetz-Telefone, Fernkopierer und Computer ist.

7. Verfahren nach Anspruch 6, **dadurch gekennzeichnet, dass** die Warnmitteilung dem zugeordneten Endgerät angepasst ist.

8. Verfahren nach einem der Ansprüche 1 bis 5, **dadurch gekennzeichnet, dass** das Verfahren außerdem einen Schritt der Auswahl eines zugeordneten Endgeräts aus einer Gruppe von zugeordneten Endgeräten enthält.

9. Verfahren nach Anspruch 8, **dadurch gekennzeichnet, dass** die Auswahl ausgehend von Lokalisierungsinformationen des mobilen Endgeräts und von Lokalisierungsinformationen der zugeordneten Endgeräte durchgeführt wird.

10. Verfahren nach Anspruch 9, **dadurch gekennzeichnet, dass** die Auswahl abhängig von einer vorbestimmten Reihenfolge durchgeführt wird, die den zugeordneten Endgeräten zugewiesen ist.

11. Verfahren nach einem der Ansprüche 2 bis 10, **dadurch gekennzeichnet, dass** im Schritt der Erlangung des Aktivitätszustands oder des Inaktivitätszustands mindestens eines mobilen Endgeräts das Verfahren die Prozeduren erhält, die vom Besucherregister für das mobile Endgerät gespeichert wurden.

12. Warnsystem über den Aktivitätszustand eines mobilen Endgeräts in einem zellularen Kommunikationsnetz, wobei das zellulare Kommunikationsnetz Einrichtungen zur Erlangung des Aktivitätszustands des mobilen Endgeräts aufweist, **dadurch gekennzeichnet, dass** das System aufweist: Einrichtungen zur Erlangung des Aktivitätszustands oder Inaktivitätszustands des mobilen Endgeräts des Netzes, Einrichtungen zur Erlangung von Informationen bezüglich mindestens eines anderen Endgeräts, das dem Benutzer des mobilen Endgeräts zugeordnet ist, Einrichtungen zur Erzeugung mindestens einer Warnmitteilung über den Inaktivitätszustand des mobilen Endgeräts an das mindestens eine andere zugeordnete Endgerät, wenn das mobile Endgerät als inaktiv angesehen wird.

13. Computerprogramm, das auf einem Informationsträger gespeichert ist, wobei das Programm Anweisungen aufweist, die es ermöglichen, das Verarbeitungsverfahren nach einem der Ansprüche 1 bis 11 durchzuführen, wenn es in ein EDV-System geladen und von diesem ausgeführt wird.
